# EUROPÄISCHE PATENTSCHRIFT

(11) **EP 1 560 707 B1**
(45) Veröffentlichungstag und Bekanntmachung des Hinweises auf die Patenterteilung: **15.09.2010**
(21) Anmeldenummer: 03776880.1
(22) Anmeldetag: 03.11.2003
(51) Int. Cl.: B32B 7/12, B32B 27/32

(54) **VERBUNDKÖRPER AUS POLYACETAL, HAFTVERMITTLER UND POLYOLEFIN VERFAHREN ZU DESSEN HERSTELUNG UND DESSEN VERWENDUNG**
COMPOSITE BODY MADE FROM POLYACETAL, BONDING AGENT AND POLYOLEFIN, METHOD FOR PRODUCTION AND USE THEREOF
CORPS COMPOSITE CONSTITUE DE POLYACETAL, D'ADHESIF ET DE POLYOLEFINE, PROCEDES DE PRODUCTION DE CE CORPS COMPOSITE ET UTILISATION DE CELUI-CI

(30) Priorität: 05.11.2002 DE 10251333
(43) Veröffentlichungstag der Anmeldung: 10.08.2005
(73) Patentinhaber: Ticona GmbH, 65451 Kelsterbach (DE)
(72) Erfinder: ZIEGLER, Ursula, 55130 Mainz (DE); KURZ, Klaus, 65451 Kelsterbach (DE); REIL, Frank, 64342 Seeheim-Jugenheim (DE)
(74) Vertreter: von Kreisler Selting Werner
(86) Internationale Anmeldenummer: PCT/EP2003/012210
(87) Internationale Veröffentlichungsnummer: WO 2004/041531

(56) Entgegenhaltungen:
- WO-A-98/29245
- PATENT ABSTRACTS OF JAPAN vol. 1999, no. 09, 30. Juli 1999 (1999-07-30) & JP 11 091040 A (POLYPLASTICS CO), 6. April 1999 (1999-04-06)
- PATENT ABSTRACTS OF JAPAN vol. 1998, no. 01, 30. Januar 1998 (1998-01-30) & JP 09 248851 A (POLYPLASTICS CO), 22. September 1997 (1997-09-22)
- DATABASE WPI Section Ch, Week 198031 Derwent Publications Ltd., London, GB; Class A17, AN 1980-54142C XP002271550 & JP 55 079233 A (TOPPAN PRINTING CO LTD), 14. Juni 1980 (1980-06-14)

## Beschreibung

Die Erfindung betrifft einen Verbundkörper aus Polyacetal und Polyolefin, der mit einem ausgewählten Haftvermittler verbunden wurde.

Der technische Werkstoff Polyacetal, d.h. typischerweise Polyoxy-methylenhomo- oder -copolymer (nachstehend auch "POM" genannt), hat ausgezeichnete mechanische Eigenschaften und ist darüber hinaus im allgemeinen auch widerstandsfähig gegen übliche Lösemittel und Kraftstoffe.

Aufgrund der guten Festigkeit und Härte verbunden mit einer ausgezeichneten Rückstellelastizität finden Formteile aus Polyacetal in allen Bereichen des täglichen Lebens sehr häufig Anwendung für Schnappverbindungen, insbe-sondere Clips.

Die ausgezeichneten Gleit-Reib-Eigenschaften begründen den Einsatz von POM für viele bewegliche Teile wie Getriebeteile, Umlenkrollen, Zahnräder oder Verstellhebel.

Aufgrund der sehr guten mechanischen Beständigkeit und Resistenz gegen Chemikalien werden auch vielfältige Gehäuse und Tastaturen aus POM hergestellt.

Formteile aus POM werden daher auch sehr häufig im Automobilbau eingesetzt. Die Kombination von ausgezeichneten mechanischen Eigenschaften mit der hohen Kraftstoffbeständigkeit prädestiniert das Material im gesamten Kraftstoffbereich, z.B. für Benzinpumpen oder Tankgeber.

Polyolefine, wie Polyethylen oder Polypropylen, auf der anderen Seite werden aufgrund ihrer hohen Zähigkeit und ihres günstigen Preises häufig für große Teile und für schützende Behälter und Verpackungen eingesetzt.

So findet beispielsweise Polyethylen im Automobilbau als Material für KraftstoffTanks Verwendung. Im Verpackungssektor werden Polyethylen und Polypropylen z.B. als verschweißbare Folienmaterialien oder als Material für Flaschen oder andere Behälter eingesetzt.

Im Vergleich zu Polyacetal weisen Polyolefine, wie Polyethylen oder Polypropylen, jedoch deutlich schlechtere mechanische Eigenschaften, wie Festigkeit, Härte und insbesondere Rückstellelastizität auf.

Polyolefine haben zudem den Nachteil einer hohen Quellung und einer hohen Permeationsrate für unpolare Lösungsmittel, wie z.B. für Kohlenwasserstoffe, und insbesondere Kraftstoffe im Automobilsektor. Polyethylen wird daher für den Einsatz im Tankbereich zum Teil aufwendig fluoriert, um die Permeabilität für Kohlenwasserstoffe zu verringern.

Es wäre daher wünschenswert, die besonderen Eigenschaften von Polyacetal und Polyolefinen zu kombinieren. In einem Verbundkörper könnte das Polyacetal die mechanischen Funktionen von z.B. Schnappverbindungen, Getriebeteilen, Umlenkrollen, Zahnrädern oder Verstellhebeln übernehmen, während das zähe und kostengünstigere Polyolefin, insbesondere Polyethylen, für großvolumige Teile eingesetzt werden könnte.

Aufgrund der besonderen Kraftstoffbeständigkeit von Polyacetalen sind hier auch insbesondere Bauteile, die in der Anwendung im Kontakt mit Kraftstoffen stehen, zu nennen.

Im Zuge der schärfer werdenden Verdampfungsemissionsanforderungen in einigen Staaten der USA (z.B. Kalifornien, New York, Vermont) an das Fahrzeug-Kraftstoffsystem (Low Emission Vehicle LEV II) sowie p-ZEV (partial Zero Emission Vehicle) müssen viele Baugruppen im Kraftstoffsystem auf per-meationsdichtere Kunststoffe umgestellt werden. Gerade die Verbindungs- und Dichtungstechniken an Kunststoff-Kraftstofftank und Kraftstoffleitungen müssen im Hinblick auf die Reduktion der Verdampfungsemissionen neu gestaltet werden. Neben der Reduktion der notwendigen Öffnungen am Tank sind die noch vorhandenen Öffnungen so zu gestalten, dass sie absolut dicht sind. Mit der erfindungsgemässen Lösung lassen sich z.B. der POM-Flansch zur Aufnahme der Kraftstoff-Fördereinheit und geblasene PE-Tankkörper permeationsdicht verbinden.

Wichtig bei diesen Anwendungen ist daher eine ausreichende Haftung zwischen dem Polyacetal-Bauteil und dem Polyolefin-Bauteil. Eine Forderung, die sich aufgrund der bekannten Unverträglichkeit dieser beiden Polymertypen bislang als nicht umsetzbar herausgestellt hat.

Eine andere Möglichkeit zur Herstellung von Verbunden besteht in der Coextrusion von Polyolefinen mit anderen polareren Kunststoffen, die eine bessere chemische Beständigkeit gegen die erwähnten unpolaren Lösungsmittel oder Kraftstoffe aufweisen. Nach diesem Verfahren können z.B. Folien gezogen werden oder mehrschichtige Behälter im Coextrusionsblas-formen herstellt werden. Dazu werden Haftvermittler benötigt, die einen adhäsiven Verbund zwischen Polyolefin und diesem polareren Kunststoff ermöglichen. Solche Kombinationen mit Polyolefinen sind bislang aber nur mit ausgewählten Polymeren, wie Polyamiden, Polyestern oder Polyvinylalkohol, bekannt. Verbunde von Polyacetalen und Polyolefinen mit einer ausreichenden Haftung sind bislang nicht beschrieben worden.

Bei den vorbekannten Verbunden von Polyolefinen mit Polyamiden, Polyestern oder Polyvinylalkohol werden als Haftvermittler mit Säuren oder Säurean-hydriden gepfropfte Polyolefine eingesetzt, die über die Säurefunktion mit dem polaren Kunststoff reagieren, eine chemische Verknüpfung bilden und so einen adhäsiven Verbund ermöglichen. Beispiele für derartige Verbunde sind aus den EP-A-463,84.1, US-A-5,115,033, EP-A-323,650 und DE-A-2,744,528 bekannt.

JP 11 091040 A offenbart ein co-extrudiertes oder trockenkaschiertes Laminat mit einer Polayacetal-Schicht für die Herstellung von u.a. Behältern und Rohren. Das Polyacetal enthält ein mit Aminogruppen modifiziertes Polyalkylenglykol.

Ausgehend von diesem Stand der Technik ist es Aufgabe der vorliegenden Erfindung, einen Verbundkörper aus Polyolefin und Polyacetal mit einer ausreichenden chemischen Haftung zwischen den beiden Materialien zu schaffen, bei denen die besonderen Vorteile der beiden Materialien kombiniert werden.

Eine weitere Aufgabe der vorliegenden Erfindung besteht in der Bereitstellung eines Verbundkörpers aus Polyacetal und Polyolefin.

Überraschend wurde gefunden, dass ausgewählte Haftvermittler sowohl mit Polyacetal als auch mit Polyolefinen einen adhäsiven Verbund eingehen und daher die Herstellung von Verbunden aus diesen Materialien ermöglichen.

Die vorliegende Erfindung betrifft daher einen Verbundkörper umfassend mindestens ein Polyacetal-Formteil und mindestens ein Polyolefin-Formteil, die an mindestens einer ihrer Oberflächen mit einer haftvermittelnden Schicht verbunden sind, die im wesentlichen aus einem Copolymeren oder einem Gemisch davon besteht, das sich ableitet von mindestens einem alpha-Olefin und mindestens einer ethylenisch ungesättigten Carbonsäure und/oder mindestens einem ethylenisch ungesättigten Carbonsäurederivat, wobei das molare Verhältnis von alpha-Olefin zu ethylenisch ungesättigter Carbonsäure und/oder zu ethylenisch ungesättigtem Carbonsäurederivat so gewählt wird, dass sich Verbunde mit einer Haftfestigkeit (gemessen im Zugversuch bei 23°C wie nachstehend beschrieben) von mindestens 0,2 N/mm², vorzugsweise mindestens 0,5 N/mm² ausbilden.

In den erfindungsgemäßen Verbundkörpern kommen Formteile aus Polyacetalen zum Einsatz. Dabei handelt es sich üblicherweise um Polyoxymethylenhomo- oder-copolymerisate.

Bei den Polyoxymethylenen (nachstehend auch "POM" genannt), wie sie beispielsweise in der DE-A 29 47 490 beschrieben sind, handelt es sich im Allgemeinen um unverzweigte lineare Polymere, die in der Regel mindestens 80 %, vorzugsweise mindestens 90 %, Oxymethyleneinheiten (-O-CH₂-) enthalten. Der Begriff Polyoxymethylene umfasst dabei sowohl Homopolymere des Formaldehyds oder seiner cyclischen Oligomeren, wie Trioxan oder Tetroxan als auch entsprechende Copolymere.

Homopolymere des Formaldehyds oder Trioxans sind solche Polymere, deren Hydroxylendgruppen in bekannter Weise chemisch gegen Abbau stabilisiert sind, z. B. durch Veresterung oder durch Veretherung.

Copolymere sind Polymere aus Formaldehyd oder seinen cyclischen Oligomeren, insbesondere Trioxan, und cyclischen Ethern, cyclischen Acetalen und/oder linearen Polyacetalen.

Derartige POM-Homo- oder Copolymerisate sind dem Fachmann an sich bekannt und in der Literatur beschrieben.

Ganz allgemein weisen diese Polymere mindestens 50 mol-% an wieder-kehrenden Einheiten -CH₂-O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

In den erfindungsgemäßen Verbundkörpern werden POM-Copolymere bevorzugt, insbesondere solche, die neben den wiederkehrenden Einheiten -O-CH₂- noch bis zu 50, vorzugsweise von 0,1 bis 20 und insbesondere 0,5 bis 10 Mol- % an wiederkehrenden Einheiten 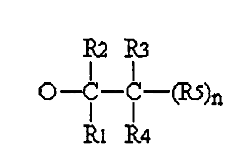 enthalten, wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH2-, -O-CH₂-, eine C₁- bis C₄-Alkyl- oder C₁- bis C₄- 4-Haloalkyl substituierte Methylengruppe oder eine entsprechende Oxymethylengruppe darstellen und n einen Wert im Bereich von 0 bis 3 hat.

Vorteilhafterweise können diese Gruppen durch Ringöffnung von cyclischen Ethern in die Copolymeren eingeführt werden. Bevorzugte cyclische Ether sind solche der Formel 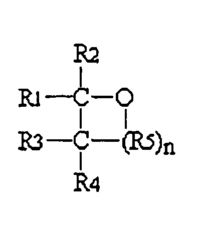 wobei R¹ bis R⁵ und n die obengenannte Bedeutung haben.

Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether sowie lineare Oligo- oder Polyformale, wie Polydioxolan oder Polydioxepan, als Comonomere genannt.

Besonders vorteilhaft werden Copolymere aus 99,5 - 95 Mol-% Trioxan und 0,5 bis 5 mol-% eines der vorgenannten Comonomere eingesetzt.

Als Polyoxymethylene ebenfalls geeignet sind Oxymethylenterpolymerisate, die beispielsweise durch Umsetzung von Trioxan, einem der vorstehend be-schriebenen cyclischen Ether und mit einem dritten Monomeren, vorzugsweise einer bifunktionellen Verbindung der Formel 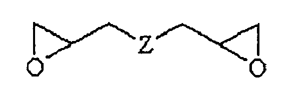 wobei Z eine chemische Bindung, -O- oder -O-R⁶-O- (R⁶ = C₂- bis C₈-Alkylen oder C₂- bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1, sowie Diether aus 2 Mol Glycidylverbindung und 1 Mol eines aliphatischen Diols mit 2 bis 8 C-Atomen, wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen POM-Homo- und Copolymerisate sind dem Fachmann bekannt und in der Literatur beschrieben.

Die bevorzugt eingesetzten POM-Copolymere haben Schmelzpunkte von mindestens 150°C und Molekulargewichte (Gewichtsmittelwert) M_{w} im Bereich von 5.000 bis 200.000, vorzugsweise von 7.000 bis 150.000.

Endgruppenstabilisierte POM-Polymerisate, die an den Kettenenden C-C-Bindungen aufweisen, werden besonders bevorzugt eingesetzt.

Die eingesetzten POM-Polymere haben im allgemeinen einen Schmelzindex (MVR Wert 190/2,16) von 0,5 bis 75 cm³/10 min (ISO 1133).

Neben diesen Bestandteilen können die Polyacetal-Formmassen zur Herstellung der erfindungsgemäßen Verbundkörper noch weitere an sich bekannte Zusatzstoffe enthalten.

Beispiele dafür sind Verarbeitungshilfen, wie Antioxidantien, Säurefänger, Formaldehydfänger, UV-Stabilisatoren, Haftvermittler, Gleitmittel, Nukleierungsmittel oder Entformungsmittel; Füllstoffe, wie Glaskugeln, Calciumcarbonat, Talkum, Wollastonit oder Siliciumdioxid; Verstärkungs-materialien, wie Carbonfasern, Aramidfasern oder Glasfasern; Antistatika oder Zusätze, die der Formmasse eine gewünschte Eigenschaft verleihen, wie Farbstoffe und/oder Pigmente und/oder Schlagzähmodifiziermittel und/oder elektrische Leitfähigkeit vermittelnde Zusätze, z.B. Ruß oder Metallpartikel, sowie Mischungen dieser Zusätze, ohne jedoch den Umfang auf die genannten Beispiele zu beschränken.

Der Anteil dieser Zusatzstoffe in den Polyacetal-Formmassen zur Herstellung der erfindungsgemäßen Verbundkörper beträgt üblicherweise bis zu 30 Gew.%, bezogen auf die Gesamtzusammensetzung.

In den erfindungsgemäßen Verbundkörpern kommen Formteile aus Poly-olefinen zum Einsatz. Dabei handelt es sich üblicherweise um Homo- oder-copolymerisate, die sich von alpha-Olefinen oder von deren Gemischen ableiten, wobei als Cokomponenten auch mono-, bi- oder höhercyclische Olefine eingesetzt werden können.

Beispiele für alpha-Olefine sind But-1-en, Pent-1-en, Hex-1-en, Oct-1-en, Prop-1-en und insbesondere Ethylen.

Beispiele für cyclische Olefine sind Cyclohexen oder Norbornen.

Typische Beispiele für Polyolefine sind Polypropylen oder Polyethylen oder Copolymere des Propylens und/oder des Ethylens mit geringen Anteilen, beispielsweise bis zu 5 Mol.%, an höheren alpha-Olefinen, wie den oben genannten Monomeren.

Bevorzugt werden Polypropylen und ganz besonders bevorzugt Polyethylen eingesetzt. Unter Polyethylen sind im Rahmen dieser Beschreibung alle bekannten Typen des Polyethylens zu verstehen, also Hochdruck- und Niederdruck-Polyethylen, die auf beliebige Weise und unter Einsatz beliebiger Katalysatoren hergestellt sein können.

Typische Molekulargewichte der in den erfindungsgemäßen Verbundkörpern eingesetzten Polyolefine bewegen sich im Bereich bis zu 1*10⁶ g/mol (gemessen viskosimetrisch). Die Methode zur viskosimetrischen Bestimmung des Molekulargewichtes ist zum Beispiel in CZ - Chemische Technik 4 (1974), 129 beschrieben.

Die Polyolefin-Formmassen zur Herstellung der erfindungsgemäßen Verbundstoffe können übliche Hilfs-, Zusatz-, Füll- und Verstärkungsmittel enthalten, welche die Verarbeitung bzw. Weiterverarbeitung erleichtert und/oder welche dem Weiterverarbeitungsprodukt gewünschte Eigenschaften verleihen.

Beispiele für Zusatzstoffe sind Füllstoffe und/oder insbesondere Verstärkungs-stoffe, wie Farbstoffe oder organische oder anorganische Pigmente, beispielsweise Azo- und Diazopigmente, Metallkomplexpigmente, Titandioxid, Eisenoxid, Chromoxid, Ultramarin Pigmente, Aluminiumsilikat-Pigmente oder Ruß; Antistatika, wie Ruß; Verstärkungsmittel, wie Fasern aus unterschiedlichsten Materialien, wie Glas, Kohlenstoff oder Metall; oder mineralische Füllstoffe, wie Calciumcarbonat, Kaolin, Tone, Titandioxid, Aluminium-Trihydrat, Wollastonit, Talkum, Pyrophyllit, Quarz, Silikate, Bariumsulfat, Antimonoxid, Glimmer, Calciumsulfat, Magnesiumhydroxid oder Feldspat; synthetische Füllstoffe, wie Ruß, synthetische Silikate, feste und hohle Microspheres, auf Glas basierende Additive, metallische Additive, wie Aluminium-, Eisen- oder Silberpulver, oder magnetische Additive.

Beispiele für weitere Zusatzstoffe sind Antioxidantien, sowie Verarbeitungshilfsmittel, wie Entformungsmittel, Gleitmittel oder Haftmittel.

Der Anteil dieser Zusatzstoffe in den Polyolefin-Formmassen zur Herstellung der erfindungsgemäßen Verbundkörper beträgt üblicherweise bis zu 30 Gew.%, bezogen auf die Gesamtzusammensetzung.

Die Polymeren und Copolymeren, welche die haftvermitteinde Schicht aufbauen, sind an sich bekannt und für andere Polymerkombinationen bereits beschrieben worden.

Bei den haftvermittelnden Polymeren handelt es sich um Copolymere, die sich ableiten von mindestens einem alpha-Olefin und mindestens einer ethylenisch ungesättigten Carbonsäure und/oder mindestens einem ethylenisch ungesättigten Carbonsäurederivat.

Bei der Auswahl geeigneter Haftvermittler aus der genannten Gruppe der Polyolefincopolymeren ist die Zusammensetzung so zu wählen, dass der Anteil an ethylenisch ungesättigten Carbonsäuren und/oder ethylenisch ungesättigten Carbonsäurederivaten hoch genug ist, um eine Verträglichkeit mit dem POM zu erzielen, andererseits aber auch nicht zu hoch, um eine Verträglichkeit zum Polyolefin zu erzielen. Dabei ist das molare Verhältnis der unpolaren alpha-Olefine zu den polaren ethylenisch ungesättigten Carbonsäuren und/oder zu den polaren ethylenisch ungesättigten Carbonsäurederivaten im Copolymeren so zu wählen, dass das Copolymer sowohl auf der Oberfläche des unpolaren Polyolefinformteils als auch auf der Oberfläche des polaren POM-Formteils haftet. Die Haftung kann, wie nachstehend beschrieben wird, neben der Zusammensetzung des Haftvermittlers auch durch die Art und Weise der Herstellung beeinflusst werden. Die erfindungsgemäß zum Einsatz kommenden Haftvermittler müssen jedoch ein solches Verhältnis von polaren zu unpolaren Bestandteilen im Molekül aufweisen, dass damit die Herstellung von Verbunden mit einer Haftfestigkeit (gemessen im Zugversuch bei 23°C gemäß dem weiter unten beschriebenen Verfahren) von mindestens 0,2 N/mm² möglich ist.

Wie das molare Verhältnis von polaren zu unpolaren Monomeren im Einzelfall zu wählen ist, kann nicht mit Bestimmtheit vorhergesagt werden, sondern muss im Einzelfall ermittelt werden. Dieses Verhältnis wird durch eine Vielzahl von Parametern bestimmt, wie der Art der das Copolymere aufbauenden Monomeren, der Art der Anordnung der Monomeren im Copolymeren, oder Art der Herstellung des Verbundes.

Die erfindungsgemäß eingesetzten Haftvermittler sind so auszuwählen, dass diese sowohl zum POM wie auch zum Polyolefin zu einer nach dem unten beschriebenen Verfahren gemessenen Haftfestigkeit im Zugversuch von mindestens 0,2 N/mm² führen.

Zur Erreichung dieser Haftfestigkeit kann das angewandte Verarbeitungsver-fahren zur Erzielung des Verbundes mit dem Haftvermittler eine Rolle spielen. Zur Erzielung einer guten Haftfestigkeit muss bei der Verarbeitung genügend Wärme im Haftvermittler eingebracht werden. Deshalb ist auch die geeignete Reihenfolge bei der Verarbeitung zu beachten. Beim Aufbringen des POM oder des Polyolefins auf den Haftvermittler lassen sich durch den höheren Wärmeinhalt dieser Materialien höhere Haftfestigkeiten erzielen (vergl. Tabellen 1 bis 3). Je nach der Zusammensetzung des Haftvermittlers kann daher die geeignete Reihenfolge bei der Verarbeitung für ein anzustrebendes Ergebnis ausschlaggebend sein.

Die Zusammensetzung der Copolymeren bestimmt zudem die Kristallinität und dadurch die Wärmeformbeständigkeit der Haftvermittler. Dabei sind die Haftvermittler mit einer höheren Schmelztemperatur oder Erweichungs-temperatur nach Vicat, beispielsweise von mehr als 50°C, insbesondere von mehr als 60°C, aufgrund ihrer Temperaturbeständigkeit im jeweiligen Anwendungsgebiet besonders bevorzugt.

Unter dem Begriff "Copolymer" sind im Rahmen dieser Beschreibung sämtliche Polymeren zu verstehen, die sich von mindestens zwei der oben beschriebenen Monomeren ableiten. Dabei kann es sich also beispielsweise um Co-, Ter- oder Quaterpolymere handeln. Die Cokomponente kann dabei gemäß den Polymerisationsparametern statistisch, alternierend oder in Form von Blöcken in das Polymere eingebaut sein oder auf ein Grundgerüst gepfropft sein.

Als ethylenisch ungesättigte Carbonsäuren zum Copolymerisieren mit alpha-Olefinen und/oder zum Modifizieren von Polyolefinen oder Co-polyolefinen lassen sich beliebige Carbonsäuren einsetzen, die mindestens eine ethylenisch ungesättigte Gruppe aufweisen, über die Copolymerisation bzw. die Modifikation erfolgen kann. Neben Monocarbonsäuren können auch Di- oder Polycarbonsäuren eingesetzt werden.

Es lassen sich beliebige aliphatische oder cycloaliphatische Carbonsäuren einsetzen, sofern diese mindestens eine polymerisierbare Doppelbindung aufweisen. Typische Beispiele für ethylenisch ungesättigte Carbonsäuren sind Acrylsäure, Methacrylsäure, Itaconsäure oder Maleinsäure.

Als ethylenisch ungesättigte Carbonsäurederivate zum Copolymerisieren mit alpha-Olefinen und/oder zum Modifizieren von Polyolefinen oder Co-polyolefinen lassen sich anstelle von oder zusammen mit ethylenisch ungesättigten Carbonsäuren die Derivate der oben beschriebenen ethylenisch ungesättigten Carbonsäuren einsetzen, beispielsweise deren Ester, Amide oder Anhydride.

Vorzugsweise setzt man die Ester dieser Carbonsäuren ein, insbesondere die Alkylester.

Unter den Begriff "ethylenisch ungesättigtes Carbonsäurederivat" fallen auch Derivate von gesättigten Carbonsäuren, die im derivatisierten Teil des Moleküls mindestens eine polymerisierbare Doppelbindung aufweisen. Ein Beispiel dafür sind Ester gesättigter Carbonsäuren, die sich von einem ethylenisch ungesättigten Alkohol ableiten. Beispiele dafür sind Vinylacetat oder Vinylbutyrat.

Als Olefine, die zur Herstellung der erfindungsgemäß einzusetzenden Haftvermittler eingesetzt werden können, lassen sich beliebige alpha-Olefine oder deren Kombinationen verwenden.

Ferner lassen sich auch Polyolefine einsetzen, die mit Cokomponenten modifiziert werden können. Beispiele dafür sind bereits weiter oben bei der Beschreibung der die Formteile bildenden Polyolefine gegeben.

Vorzugsweise handelt es sich bei dem erfindungsgemäß einzusetzenden Haftvermittler um ein Copolymer abgeleitet von einem alpha-Olefin, insbesondere von Ethylen, sowie von mindestens einer ethylenisch ungesättigten Carbonsäure und/oder mindestens einem ethylenisch ungesättigten Carbonsäurederivat

Besonders bevorzugte Copolymere dieses Typs sind Ethylen-Copolymere mit Acrylsäure, Methacrylsäure, Acrylsäureester, Methacrylsäureester, Maleinsäureanhydrid, Itaconsäureanhydrid oder deren Kombinationen als Comonomer.

Eine weitere bevorzugte Gruppe von Copolymeren sind Ethylen-Vinylester-Copolymere, insbesondere Ethylen-Vinylacetat-Copolymere.

Ebenfalls bevorzugte Haftvermittler sind von mindestens einem alpha-Olefin und mindestens einer ethylenisch ungesättigten Carbonsäure und/oder mindestens einem ethylenisch ungesättigten Carbonsäurederivat abgeleitete Copolymere, die mit mindestens einer weiteren ethylenisch ungesättigten Carbonsäure und/oder mindestens einem weiteren ethylenisch ungesättigten Carbonsäurederivat copolymerisiert bzw. modifiziert sind.

Zu den Copolymeren dieses Typs zählen insbesondere Ethylen-Vinylester-Copolymere, die mit Acrylsäure, Methacrylsäure, Acrylsäureester, Methacrylsäureester, Maleinsäureanhydrid oder deren Kombinationen modifiziert sind, insbesondere Ethylen-Vinylacetat-Copolymere, die mit Acrylsäure- und/oder Methacrylsäureester und/oder Maleinsäureanhydrid copolymerisiert bzw. modifiziert sind.

Diese haftvermittelnden Copolymeren können jedes für sich oder auch als Mischung von ein oder mehreren Komponenten eingesetzt werden.

Besonders bevorzugt erfindungsgemäß eingesetzte haftvermittelnde Polymere werden ausgewählt aus folgenden Gruppen oder deren Kombinationen von einem oder mehreren aus diesen Gruppen:
Ethylen-Vinylacetat-Copolymere; derartige Produkte sind unter der Bezeichnung Levapren® erhältlich (Bayer).
Ethylen-Vinylacetat-Maleinsäureanhydrid-Terpolymere; derartige Produkte sind unter der Bezeichnung Orevac® erhältlich (Atofina).
Ethylen-Butylacrylat-Copolymere; derartige Produkte sind unter der Bezeichnung Lotryl® erhältlich (Atofina).
Ethylen-Ethylacrylat-Copolymere; derartige Produkte sind unter der Bezeichnung Lotryl® erhältlich (Atofina).
Ethylen-Methylacrylat-Copolymere; derartige Produkte sind ebenfalls unter der Bezeichnung Lotryl® erhältlich (Atofina).
Ethylen-Glycidylmethacrylat-Copolymere; derartige Produkte sind unter der Bezeichnung Lotader® erhältlich (Atofina).
Ethylen-Methylacrylat-Glycidylmethacrylat-Terpolymere; derartige Produkte sind unter der Bezeichnung Lotader® erhältlich (Atofina).
Ethylen-Butylacrylat-Glycidylmethacrylat-Terpolymere modifiziert mit Maleinsäureanhydrid; derartige Produkte sind unter der Bezeichnung Lotader® erhältlich (Atofina).
Ethylen-Acrylat-Maleinsäureanhydrid-Terpolymere; derartige Produkte sind unter der Bezeichnung Lotader® erhältlich (Atofina).
Ethylen-Vinylacetat modifiziert mit Maleinsäureanhydrid; derartige Produkte sind unter der Bezeichnung Plexar® erhältlich (Equistar).

Die vorliegende Erfindung betrifft daher besonders bevorzugt einen Verbund enthaltend ein POM-Formteil und damit über eine Schicht aus haftver-mittelndem Polymeren verbunden ein Polyolefin-Formteil, wobei das haftvermittelnde Polymere ausgewählt wird aus der Gruppe bestehend aus mit ethylenisch ungesättigten Carbonsäureester und/oder ungesättigten Carbonsäureanhydriden gepfropften Ethylenhomopolymeren oder Ethylen-vinylestern, aus Ethylen-Vinylester-Copolymeren, insbesondere Ethylen-Vinylacetat, aus Ethylen-Acrylester-Copolymeren, aus Ethylen-Glycidylmethacrylester-Copolymeren oder aus deren Gemischen.

Ganz besonders bevorzugt werden als haftvermittelnde Polymere Copolymere abgeleitet von Ethylen und Vinylacatat (E-VA) oder von Ethylen und Acrylestern, insbesondere Methylacrylat, Ethylacrylat, Propylacrylat, Butylacrylat oder Glycidylmethacrylat, eingesetzt, die gegebenenfalls zusätzlich mit Anhydriden ungesättigter Carbonsäuren, insbesondere mit Maleinsäureanhydrid, modifiziert sind.

Dabei sind haftvermitteinde Polymere mit einer höheren Schmelztemperatur (gemessen durch Differential-Scanning-Calorimetrie (DSC)) bzw. Erweichungstemperatur nach Vicat (ISO 306), beispielsweise von mehr als 50°C, insbesondere mehr als 60°C, aufgrund ihrer Temperatur-Beständigkeit besonders bevorzugt.

Unter der Bezeichnung Verbundkörper sind im Rahmen dieser Beschreibung beliebige Verbunde zu verstehen, sofern diese zumindest die Kombination Polyacetal-Formkörper verbunden mit mindestens einem Polyolefin-Formkörper über eine Schicht aus den oben definierten haftvermittelnden Polymeren aufweisen. Bei den Formkörpern kann es sich um beliebige dreidimensionale Ausformungen handeln, wobei auch Folien oder Filme mit eingeschlossen sind.

Bevorzugt sind Verbundkörper, die mindestens drei Schichten aufweisen und mindestens eine Schichtenfolge in der Reihenfolge Polyacetal, haftvermittelnde Schicht und Polyolefin besitzen.

Weitere bevorzugte erfindungsgemäße Verbundkörper weisen fünf Schichten auf und besitzen eine Schichtenfolge in der Reihenfolge Polyacetal, haftvermittelnde Schicht, Polyolefin, haftvermitteinde Schicht und Polyacetal oder in der Reihenfolge Polyolefin, haftvermittelnde Schicht, Polyacetal, haftvermittelnde Schicht und Polyolefin.

Die Herstellung der erfindungsgemäßen Verbundkörper kann auf unterschiedliche Arten erfolgen.

Als mögliche Herstellverfahren für solche Verbundkörper bieten sich z.B. das Mehrkomponentenspritzgußverfahren oder das Mehrschichtextrusions-verfahren an.

Auch ein Umblasen von vorgefertigten POM-Bauteilen mit Polyolefinen im Extrusionsblasen ist hier als Möglichkeit gegeben.

In einer Ausführungsform wird zuerst ein Formteil aus Polyacetal geformt, auf das anschließend eine Schicht des speziellen haftvermittelnden Polymeren aufgebracht wird, beispielsweise im Spritzgießverfahren oder im Extrusionsverfahren. Auf diese Kombination wird anschließend ein Formteil aus Polyolefin angeformt, beispielsweise im Spritzgießverfahren oder im Extrusionsverfahren.

In einer weiteren Ausführungsform wird zuerst ein Formteil aus Polyolefin geformt, auf das anschließend eine Schicht des speziellen haftvermittelnden Polymeren aufgebracht wird, beispielsweise im Spritzgießverfahren oder im Extrusionsverfahren. Auf diese Kombination wird anschließend ein Formteil aus Polyacetal angeformt, beispielsweise im Spritzgießverfahren oder im Extrusionsverfahren.

Der erfindungsgemäße Verbundkörper wird dabei also entweder durch ein Polyacetal-Formteil gebildet, das teilweise oder vollständig mit dem speziellen haftvermittelnden Polymeren und dem Polyolefin beschichtet wurde oder an das ein oder mehrere Formteile aus Polyolefin durch Verwendung des speziellen haftvermittelnden Polymeren angeformt wurden, oder der erfind-ungsgemäße Verbundkörper wird durch ein Polyolefin-Formteil gebildet, das teilweise oder vollständig mit dem speziellen haftvermittelnden Polymeren und dem Polyacetal beschichtet wurde oder an das ein oder mehrere Formteile aus Polyacetal durch Verwendung des speziellen haftvermittelnden Polymeren angeformt wurden.

Die Erfindung betrifft daher auch ein Verfahren zur Herstellung des oben definierten Verbundkörpers umfassend die Massnahmen:
a) Herstellung eines Polyacetal-Formteils aus einer Polyacetal enthaltenden Formmasse in an sich bekannter Weise,
b) Aufbringen einer haftvermittelnden Schicht enthaltend mindestens eines der oben definierten Polymeren auf mindestens eine Oberfläche des Polyacetal-Formteils in an sich bekannter Weise, und
c) Aufbringen einer Polyolefin enthaltenden Formmasse auf die nach Schritt b) hergestellte haftvermittelnde Schicht, so dass ein Verbund von Polyacetal-Formteil und Polyolefin-Formteil entsteht.

Weiterhin betrifft die Erfindung ein Verfahren zur Herstellung des oben definierten Verbundkörpers umfassend die Massnahmen:
a) Herstellung eines Polyolefin-Formteils aus einer Polyolefin enthaltenden Formmasse in an sich bekannter Weise,
b) Aufbringen einer haftvermittelnden Schicht enthaltend mindestens eines der oben definierten Polymeren auf mindestens eine Oberfläche des Polyolefin-Formteils in an sich bekannter Weise, und
c) Aufbringen einer Polyacetal enthaltenden Formmasse auf die nach Schritt b) hergestellte haftvermittelnde Schicht, so dass ein Verbund von Polyacetal-Formteil und Polyolefin-Formteil entsteht.

Die Herstellung des Verbundkörpers erfolgt nach allgemein bekannten Methoden und Verfahren.

Als besonders wirtschaftlich und vorteilhaft haben sich das Mehrkomponentenspritzgußverfahren (Einlegeverfahren oder Umsetzverfahren) oder das Mehrschichtextrusionsverfahren herausgestellt.

Bei der Herstellung der Verbunde hat sich herausgestellt, dass die im Einzelfall für eine gegebene Kombination zu erzielende Haftung auch von der Reihenfolge der Verbindungsschritte abhängen kann. Spritzt man beispielsweise eine Polyacetal-Formmasse auf eine Kombination Polyolefin-Formkörper / Haftvermittlerschicht, so sind damit aufgrund des Anschmelzens des Haftvermittlers häufig höhere Haftfestigkeiten zum Polyacetal zu erzielen, als beim Spritzen des Haftvermittlers auf das Polyacetal und anschließendem Aufspritzen des Polyolefins auf den Haftvermittler. Die Zusammensetzung des Haftvermittlers und die Reihenfolge der Verbindungsschritte sind daher so zu wählen, dass sowohl zum Polyolefin als auch zum Polyacetal eine Haftung von mindestens 0,2 N/mm² nach dem nachstehend beschriebenen Messverfahren erzielt werden kann.

Die erfindungsgemäßen Verbundkörper können in unterschiedlichsten technischen Gebieten zum Einsatz kommen.

Beispiele dafür sind die Verwendung als Bauteile von Fahrzeugen, insbesondere als Bauteile, die mit Kraftstoffen in Berührung kommen.

Neben dem Einsatz im Automobil-, Schiffs- und Flugzeugbau lassen sich die erfindungsgemäßen Verbundkörper aber auch in kraftstoff- oder chemikalienverarbeitenden Industrien oder im Kraftstoffhandel, wie in Tankstellen, Raffinierien oder in Chemieanlagen einsetzen.

Beispiele für Bauteile, in denen die erfindungsgemäßen Verbunde eingesetzt werden können sind Kraftstoff-Fördereinheiten, Ventile, Tanks oder Einfüllstutzen.

Bevorzugt verwendet man die erfindungsgemäßen Verbundkörper für POM-Ventile, die mit Kraftstoffen in Berührung kommen, wie für Roll-Over Ventile, für Ventile im und auf dem Tank, sowie für Förderventile; oder als gespritzte, geblasene und tiefgezogene Kraftstofftanks (PE/Haftvermittler/POM), sowie als Multilayer-Kraftstoffleitungsanbindungen, oder als Einfüllstutzen, insbesondere in der Form POM umspritzt mit PE, bzw. POM Einfüllstutzen/PE-Ring angespritzt zum anschließenden Verbinden über Heizelementschweißen mit dem blasgeformten Multilayer PE-HD Einfüllrohr.

Bevorzugt verwendet man die erfindungsgemäßen Verbundkörper als Ventile, insbesondere im POM/PE Verbund, wie Kugelabsperrventile aus POM/PE Verbund (POM Absperrventil und PE-Gehäuse, das an eine Rohrleitung geschweißt werden kann).

Weitere bevorzugte Einsatzgebiete für die erfindungsgemäßen Verbundkörper sind die Anwendung als Schnappverbindungen, Getriebeteile, Umlenkrollen, Zahnräder, Verstellhebel, Rohre, sowie als Verpackungen.

Bevorzugte Einsatzgebiete sind Rohre, beispielsweise für Rohrleitungen für den Temperaturbereich bis 100 °C aus POM/PE Verbund mit POM Innenwand (Innenwand POM / Haftvermittler / Außenwand PE-HD), für Rohrleitungen oder Chemieanlagen, sowie Verpackungen, wie Kanister oder Flaschen mit guter Chemikalienbeständigkeit (Innenwand PE umschlossen von Haftvermittler/POM).

Die Erfindung betrifft auch die Verwendung der Verbundkörper für diese Zwecke.

Die nachfolgenden Beispiele erläutern die Erfindung ohne diese zu begrenzen.

Die Haftfestigkeit zwischen der Polyacetal- Komponente und den speziellen Haftvermittlern bzw. zwischen der Polyethylen-Komponente und den speziellen Haftvermittlern, d.h. an Verbunden aus zwei Materialien, wurde mit dem nachstehend beschriebenen Messverfahren ermittelt.

Für die Spritzgießversuche wurde eine Dreikomponenten-Spritzgußmaschine mit einer Schließkraft von 2000 kN verwendet (Typ FM 175/200, Hersteller Klöckner Ferromatik, Malterdingen, BRD). Von den vorhandenen drei Schnecken wurde ein Aggregat mit einem Durchmesser von 45 mm eingesetzt. In einer halbseitig verschlossenen Kavität wurden zunächst halbe ISO-Zugstäbe aus Polyacetal oder Polyethylen oder dem entsprechenden Haftvermittler unter den in den Tabellen unter Material angegebenen Bedingungen für die Masse-Temperatur Tₘ und die Werkzeug-Temperatur T_{w} vorgespritzt.

Die vorgespritzten halben Polyacetal-Zugstäbe wurden später für die Einlegeversuche zunächst in einem Ofen auf 155°C vorgewärmt und sofort heiß in die vollständig offene Kavität eingelegt und dann der Haftvermittler aufgespritzt.

Die hierbei verwendeten Parameter Massetemperaturen (Tₘ), Werkzeugtemperaturen (T_{w}), Nachdrücke (Pa), Nachdruckzeiten (tpa) und Einspritzgeschwindigkeiten (ve) für die Komponente 2 (Haftvermittler) sind jeweils in den nachstehenden Tabellen angegeben.

Mit den halben Stäben aus Polyethylen wurde genauso verfahren, jedoch betrug hier die Vorwärm-Temperatur (Einlege-Temperatur) nur 90°C.

Die Versuche mit den Haftvermittlern als erste Komponente wurden genauso durchgeführt, jedoch wurden diese halben Stäbe nicht vorgewärmt, sondern mit Raumtemperatur in das bei 60°C temperierte Werkzeug eingelegt. Dann wurden Polyacetal oder Polyethylen mit den angegebenen Massetemperaturen auf die Haftvermittler gespritzt.

Sämtliche Haftvermittler wurden direkt vor der Verarbeitung getrocknet um so den Abbau durch Feuchtigkeit zu reduzieren.

Bei ausreichender Haftung entstand nach dem beschriebenen Verfahren ein vollständiger Zugstab mit einer Verbundnaht zwischen den beiden Schulterhälften aus Polyacetal oder Polyethylen und dem speziellen Haftvermittler.

Diese Prüfstäbe wurden auf einer Zugprüfmaschine Typ 1455 (Fa. Zwick, Ulm, BRD) im Zugversuch bei 23°C (ISO 527) mit einer Zuggeschwindigkeit von 50 mm/min geprüft.

Für jeden Versuch wurden zehn Verbund-Zugstäbe gespritzt und geprüft. Aus dem Ergebnis des Zugversuches (Spannung bei Dehnung) wurde die Zugfestigkeit bis zum Bruch der Stäbe an der Verbundnaht (Haftfestigkeit) und die dazugehörige Bruchdehnung bestimmt. Die für die zehn Prüfkörper erhaltenen Werte wurden gemittelt und die dazugehörige Standardabweichung berechnet. Die Ergebnisse sind in den nachfolgenden Tabellen angegeben.

In den Beispielen wurden folgende haftvermittelndenen Polymere untersucht:
Haftvermittler 1 (HV1): Terpolymer auf der Basis von Ethylen-Vinylacetat und Malein-säureanhydrid (Orevac® 9318 (Atofina), Schmelztemperatur 85°C)
Haftvermittler 2 (HV2): Copolymer auf der Basis von Ethylen-Butylacrylat (Lotryl® 28 BA 175 (Atofina), Schmelztemperatur 80°C)
Haftvermittler 3 (HV3): Copolymer auf der Basis von Ethylen-Methylacrylat (Lotryl® 20 MA 08 (Atofina), Schmelztemperatur 80°C)
Haftvermittler 4 (HV4): Copolymer auf der Basis von Ethylen-Glycidylmethacrylat (Lotader® 8840 (Atofina), Schmelztemperatur 109°C)
Haftvermittler 5 (HV5): Terpolymer auf der Basis von Ethylen, Methylacrylat und Glycidylmethacrylat (Lotader® 8900 (Atofina), Schmelztemperatur 65-73°C)
Haftvermittler 6 (HV6): Terpolymer auf der Basis von Ethylen, Butylacrylat und Maleinsäureanhydrid (Lotader® 3410 (Atofina), Schmelztemperatur 95°C)
Haftvermittler 7 (HV7): Copolymer auf der Basis von Ethylen-Vinylacetat modifiziert mit Maleinsäureanhydrid (Plexar® PX 107 (Equistar), Vicat-Temperatur 90°C)
Haftvermittler 8 (HV8): Copolymer auf der Basis von Ethylen-Vinylacetat modifiziert mit Maleinsäureanhydrid (Plexar® PX 108 (Equistar), Vicat-Temperatur 90°C)
Haftvermittler 9 (HV9): Copolymer auf der Basis von Ethylen-Vinylacetat modifiziert mit Maleinsäureanhydrid (Plexar® PX 114 (Equistar), Vicat-Temperatur 81 °C)
Haftvermittler 10 (HV10): Copolymer auf der Basis von Ethylen-Vinylacetat modifiziert mit Maleinsäureanhydrid (Plexar® PX 1164 (Equistar), Vicat-Temperatur 58°C)
Haftvermittler 11 (HV11): Copolymer auf der Basis von Ethylen-Vinylacetat (Levapren® KA 8479 (Bayer)
Für die Zwei-Komponentenspritzgießversuche wurde ein HDPE-Polyethylen (Hostalen® GM 7745) verwendet, das sich für den Einsatz in Kraftstofftanks eignet.
Für die Zwei-Komponentenspritzgießversuche wurde ein handelsübliches Polyacetal-Copolymer aus Trioxan und etwa 2 Gew.% Ethylenoxid mit einem Schmelzeindex MVR 190/2.16 (gemäss ISO 1133) von 8 cm³/10min (Hostaform® C 9021) verwendet.

Die Durchführung der einzelnen Versuche und die Ermittlung der mechanischen Daten der erhaltenen Zweikomponenten-Verbundkörper sind in den folgenden Tabellen dargestellt.

**Tabelle 1**

| Versuche mit Polyethylen ("PE") als erster Komponente und Haftvermittler als aufgespritzter Komponente | | | | | | | | |
|---|---|---|---|---|---|---|---|---|
| Versuch Nr. | 1. Komp. | T_{m,}T_{w} 1. K. (°C) | 2. Komp. | Tₘ, T_{w} zweite Komp. (°C) | pₐ, tpa zweite Komp. (bar), (sec) | Vₐ zweite Komp. (%) | Haftfestigkeit (N/mm²) | Bruchdehnung (%) |
| 1 | PE | 200, 60 | HV 11 | 200, 40 | 50, 30 | 50 | keine Adhäsion | keine Adhäsion |
| 2 | PE | 200, 60 | HV 11 | 220, 40 | 50, 30 | 50 | keine Adhäsion | keine Adhäsion |
| 3 | PE | 200, 60 | HV 1 | 200, 40 | 45, 15 | 50 | 3,8 | 10,8 |
| 4 | PE | 200, 60 | HV 1 | 220,40 | 45, 15 | 50 | 4,0 | 12,6 |
| 5 | PE | 200,60 | HV 1 | 240, 40 | 45, 15 | 50 | 4,1 | 16,0 |
| 6 | PE | 200, 60 | HV 2 | 200,40 | 35,35 | 50 | 1,7 | 9,7 |
| 7 | PE | 200, 60 | HV 2 | 220, 40 | 35, 35 | 50 | 1,9 | 14,0 |
| 8 | PE | 200, 60 | HV 2 | 240, 40 | 35,35 | 50 | 1,8 | 14,2 |
| 9 | PE | 200, 60 | HV 3 | 200, 40 | 35, 35 | 50 | 2,8 | 9,6 |
| 10 | PE | 200,60 | HV 3 | 220,40 | 35,35 | 50 | 2,8 | 9,6 |
| 11 | PE | 200, 60 | HV 3 | 240, 40 | 35, 35 | 50 | 2,8 | 10,3 |
| 12 | PE | 200,60 | HV 4 | 200, 40 | 45, 15 | 50 | 4,9 | 3,6 |
| 13 | PE | 200, 60 | HV 4 | 220, 40 | 45, 15 | 50 | 4,9 | 4,0 |
| 14 | PE | 200, 60 | HV 4 | 240, 40 | 45, 15 | 50 | 5,3 | 5,0 |
| 15 | PE | 200, 60 | HV 6 | 200,40 | 45, 15 | 50 | 3,2 | 11,6 |
| 16 | PE | 200, 60 | HV 6 | 220, 40 | 45, 15 | 50 | 3,4 | 13,5 |
| 17 | PE | 200,60 | HV 6 | 240,40 | 45, 15 | 50 | 3,4 | 18,6 |
| 18 | PE | 200, 60 | HV 5 | 200,40 | 45,25 | 50 | 1,7 | 14,4 |
| 19 | PE | 200,60 | HV 5 | 220,40 | 45, 30 | 50 | 1,4 | 11,9 |
| 20 | PE | 200,60 | HV 5 | 240,40 | 45, 30 | 50 | 1,6 | 14,2 |
| 21 | PE | 200, 60 | HV 9 | 200,40 | 40, 15 | 50 | 5,7 | 6,0 |
| 22 | PE | 200, 60 | HV 9 | 220, 40 | 40, 15 | 50 | 3,7 | 6,1 |
| 23 | PE | 200, 60 | HV 9 | 240,40 | 40,15 | 50 | 5,4 | 6,0 |

**Tabelle 2**

| Versuche mit Polyacetal ("POM") als erster Komponente und Haftvermittler als aufgespritzter Komponente | | | | | | | | |
|---|---|---|---|---|---|---|---|---|
| Versuch Nr. | 1. Komp. | Tₘ, T_{w} 1. K. (°C) | Zweite Komp. | Tₘ, T_{w} Zweite Komp. (°C) | pₐ, tpa zweite Komp, (bar), (sec) | Vₐ zweite Komp. (%) | Haftfestigkeit (N/mm²) | Bruchdehnung (%) |
| 24 | POM | 200,80 | HV 11 | 200, 40 | 50,30 | 50 | 0,5 | 41,7 |
| 25 | POM | 200, 80 | HV 11 | 220, 40 | 50, 30 | 50 | 0,5 | 85,0 |
| 26 | POM | 200, 80 | HV 1 | 200,40 | 45, 15 | 50 | keine Adhäsion | keine Adhäsion |
| 27 | POM | 200,80 | HV 1 | 220, 40 | 45, 15 | 50 | keine Adhäsion | keine Adhäsion |
| 28 | POM | 200,80 | HV 1 | 240, 40 | 45, 15 | 50 | keine Adhäsion | keine Adhäsion |
| 29 | POM | 200, 80 | HV 2 | 200, 40 | 35, 35 | 50 | 0,3 | 0,9 |
| 30 | POM | 200, 80 | HV 2 | 220, 40 | 35, 35 | 50 | 0,9 | 2,8 |
| 31 | POM | 200, 80 | HV 2 | 240, 40 | 35, 35 | 50 | 0,5 | 1,6 |
| 32 | POM | 200, 80 | HV 3 | 200, 40 | 35, 35 | 50 | keine Adhäsion | keine Adhäsion |
| 33 | POM | 200, 80 | HV 3 | 220, 40 | 35, 35 | 50 | keine Adhäsion | keine Adhäsion |
| 34 | POM | 200, 80 | HV 3 | 240, 40 | 35, 35 | 50 | keine Adhäsion | keine Adhäsion |
| 35 | POM | 200, 80 | HV 4 | 200, 40 | 45,15 | 50 | keine Adhäsion | keine Adhäsion |
| 36 | POM | 200, 80 | HV 4 | 220, 40 | 45, 15 | 50 | keine Adhäsion | keine Adhäsion |
| 37 | POM | 200, 80 | HV 4 | 240, 40 | 45, 15 | 50 | keine Adhäsion | keine Adhäsion |
| 38 | POM | 200, 80 | HV 6 | 200,40 | 45, 15 | 50 | keine Adhäsion | keine Adhäsion |
| 39 | POM | 200, 80 | HV 6 | 220, 40 | 45, 15 | 50 | keine Adhäsion | keine Adhäsion |
| 40 | POM | 200, 80 | HV 6 | 240,40 | 45, 15 | 50 | keine Adhäsion | keine Adhäsion |
| 41 | POM | 200, 80 | HV 5 | 200, 40 | 45, 25 | 50 | 0,3 | 1,5 |
| 42 | POM | 200, 80 | HV 5 | 220, 40 | 45, 30 | 50 | 0,4 | 1,9 |
| 43 | POM | 200, 80 | HV 5 | 240, 40 | 45, 30 | 50 | 0,4 | 2,2 |
| 44 | POM | 200, 80 | HV 9 | 200, 40 | 40, 15 | 50 | 2,9 | 1,1 |
| 45 | POM | 200, 80 | HV 9 | 220, 40 | 40, 15 | 50 | 2,5 | 0,9 |
| 46 | POM | 200,80 | HV 9 | 240,40 | 40, 15 | 50 | 1,9 | 0,7 |

| Versuch Nr. | 1. Komp. | Tₘ, T_{w} 1. K. (°C) | Zweite Komp. | Tₘ, Tw Zweite Komp. (°C) | pₐ, tpa zweite Komp. (bar), (sec) | Vₑ zweite Komp. (%) | Haftfestigkeit (N/mm²) | Bruchdehnung (%) |
|---|---|---|---|---|---|---|---|---|
| 47 | POM | 200,80 | HV 8 | 200, 40 | 40, 15 | 50 | 1,8 | 0,4 |
| 48 | POM | 200,80 | HV 8 | 220, 40 | 40, 15 | 50 | 2,1 | 0,5 |
| 49 | POM | 200,80 | HV 8 | 240,40 | 40, 15 | 50 | 1,6 | 0,4 |
| 50 | POM | 200,80 | HV 7 | 200, 40 | 40, 15 | 50 | keine Adhäsion | keine Adhäsion |
| 51 | POM | 200, 80 | HV 7 | 220, 40 | 40, 15 | 50 | keine Adhäsion | keine Adhäsion |
| 52 | POM | 200, 80 | HV 7 | 240, 40 | 40, 15 | 50 | keine Adhäsion | keine Adhäsion |
| 53 | POM | 200,80 | HV 10 | 200, 40 | 40, 15 | 50 | 1,2 | 1,4 |
| 54 | POM | 200, 80 | HV 10 | 220, 40 | 40, 15 | 50 | 1,8 | 2,3 |
| 55 | POM | 200, 80 | HV 10 | 240, 40 | 40, 15 | 50 | 2,0 | 2,7 |

**Tabelle 3**

| Versuche mit Haftvermittler als erster Komponente und Polyacetal ("POM") oder Polyethylen ("PE") als aufgespritzter Komponente | | | | | | | | |
|---|---|---|---|---|---|---|---|---|
| Versuch Nr. | 1. Komp. | Tₘ, T_{w} 1. K. (°C) | 2. Komp. | Tₘ, T_{w} zweite Komp. (°C) | pₐ, tpa zweite Komp. (bar), (sec) | Vₐ zweite Komp. (%) | Haftfestigkeit (N/mm²) | Bruchdehnung (%) |
| 56 | HV 1 | 200, 40 | PE | 250, 60 | 50-70, 30 | 50 | 6,5 | 144,0 |
| 57 | HV 2 | 200, 40 | PE | 250, 60 | 50-70, 30 | 50 | 1,9 | 36,7 |
| 58 | HV 3 | 200, 40 | PE | 250, 60 | 50-70, 30 | 50 | 5,0 | 100,3 |
| 59 | HV 4 | 200, 40 | PE | 250, 60 | 50-70, 30 | 50 | 8,3 | 67,9 |
| 60 | HV 6 | 200, 40 | PE | 250, 60 | 50-70, 30 | 50 | 4,7 | 64,2 |
| 61 | HV 5 | 200, 40 | PE | 250, 60 | 50-70, 30 | 50 | 2,6 | 49,1 |
| 62 | HV 9 | 200, 40 | PE | 250, 60 | 50-70, 30 | 50 | 8,9 | 72,2 |
| 63 | HV 1 | 200, 40 | POM | 250, 60 | 50-70, 30 | 50 | 3,4 | 7,4 |
| 64 | HV 2 | 200, 40 | POM | 250, 60 | 50-70, 30 | 50 | 2,2 | 64,5 |
| 65 | HV 3 | 200,40 | POM | 250,60 | 50-70, 30 | 50 | 2,7 | 9,6 |
| 66 | HV 4 | 200, 40 | POM | 250, 60 | 50-70, 30 | 50 | keine Adhäsion | keine Adhäsion |
| 67 | HV 6 | 200,40 | POM | 250, 60 | 50-70, 30 | 50 | 1,5 | 2,6 |
| 68 | HV 5 | 200, 40 | POM | 250, 60 | 50-70, 30 | 50 | 1,3 | 11,2 |
| 69 | HV 9 | 200,40 | POM | 250, 60 | 50-70, 30 | 50 | keine Adhäsion | keine Adhäsion |

Aufgrund der in den Tabellen aufgeführten Ergebnisse der Haft-Versuche ließen sich unter anderem folgende Beispiele für die erfindungsgemäßen Verbundkörper durch Mehrkomponentenspritzguss realisieren.

**Tabelle 4**

| Beispiel Nr. | Erste Komponente | Zweite Komponente (Haftvermittler) | Dritte Komponente |
|---|---|---|---|
| 1 | PE | HV 1 | POM |
| 2 | PE | HV 2 | POM |
| 3 | PE | HV 3 | POM |
| 4 | PE | HV 6 | POM |
| 5 | PE | HV 5 | POM |
| 6 | POM | HV 2 | PE |
| 7 | POM | HV 5 | PE |
| 8 | POM | HV 9 | PE |
| 9 | POM | HV 8 | PE |
| 10 | POM | HV 10 | PE |

## Patentansprüche

1. Verbundkörper umfassend mindestens ein Polyacetal-Formteil bestehend aus Polyoxymethylenhomo- oder -copolymeren und gegebenenfalls einem oder mehreren Zusatzstoffen ausgewählt aus der Gruppe bestehend aus Antioxidantien, Säurefängem, Formaldehydfängem, UV-Stabilisatoren, Gleitmitteln, Nukleierungsmitteln, Entformungsmitteln, Füllstoffen, Verstärkungsmaterialien, Farbstoffen, Pigmenten, Schlagzähmodifiziermitteln und elektrische Leitfähigkeit vermittelnden Zusätzen, und mindestens ein Polyolefin-Formteil, die an mindestens einer ihrer Oberflächen mit einer haftvermittetnden Schicht verbunden sind, die im wesentlichen aus einem Copolymeren oder einem Gemisch davon besteht, das sich ableitet von mindestens einem alpha-Olefin, mindestens einem ethylenisch ungesättigten Carbonsäureester und gegebenenfalls mindestens einem weiteren ethylenisch ungesättigten Carbonsäurederivat, wobei das molare Verhältnis von alpha-Olefin zu ethylenisch ungesättigtem Carbonsäureester und gegebenenfalls weiterem ethylenisch ungesättigtem Carbonsäurederivat so gewählt wird, dass sich Verbunde mit einer Haftfestigkeit (gemessen im Zugversuch bei 23°C) von mindestens 0,2 N/mm² ausbilden.

2. Verbundkörper nach Anspruch 1, **dadurch gekennzeichnet, dass** die Füllstoffe Glaskugeln, Calciumcarbonat, Talkum, Wollastonit oder Siliciumdioxid sind, dass die Verstärkungsmaterialien Carbonfasern, Aramidfasern oder Glasfasern sind, und dass die elektrische Leitfähigkeit vermittelnden Zusätze Ruß oder Metallpartikel sind.

3. Verbundkörper nach Anspruch 1 oder 2, **dadurch gekennzeichnet, dass** sich Verbunde mit einer Haftfestigkeit (gemessen im Zugversuch bei 23°C) von mindestens 0,5 N/mm² ausbilden.

4. Verbundkörper nach einem oder mehreren der Ansprüche 1 bis 3, **dadurch gekennzeichnet, dass** das Polyacetal-Formteil ein Formteil enthaltend ein Copolymerisat enthaltend wiederkehrende Polyoxymethylen- und Polyoxyethylen- und/oder Polyoxybutyleneinheiten ist.

5. Verbundkörper nach einem oder mehreren der Ansprüche 1 bis 4, **dadurch gekennzeichnet, dass** das Polyolefin-Formteil ein Formteil enthaltend Polyethylen ist.

6. Verbundkörper nach einem oder mehreren der Ansprüche 1 bis 5, **dadurch gekennzeichnet, dass** das alpha-Olefin Ethylen ist, das mit Acrylsäureester, Methacrylsäureester oder deren Kombinationen copolymerisiert ist.

7. Verbundkörper nach einem oder mehreren der Ansprüche 1 bis 6, **dadurch gekennzeichnet, dass** als Haftvermittler Ethylen-Vinylester-Copolymere, insbesondere Ethylen-Vinylacetat-Copolymere, eingesetzt werden.

8. Verbundkörper nach einem oder mehreren der Ansprüche 1 bis 7, **dadurch gekennzeichnet, dass** als Haftvermittler ein Ethylen-Vinylester Copolymeres eingesetzt wird, das mit Acrylsäureester, Methacrylsäureester, Itaconsäureanhydrid, Maleinsäureanhydrid oder deren Kombinationen copolymerisiert bzw. modifiziert ist, insbesondere ein Ethylen-Vinylacetat-Copolymeres, das mit Acrylsäure- und/oder Methacrylsäureester copolymerisiert bzw. modifiziert ist.

9. Verbundkörper nach einem oder mehreren der Ansprüche 1 bis 8, **dadurch gekennzeichnet, dass** der Verbund ein POM-Formteil und damit über eine Schicht aus haftvermittelndem Polymeren verbunden ein Polyolefin-Formteil enthält, wobei das haftvermittelnde Polymer ausgewählt wird aus der Gruppe bestehend aus mit ethylenisch ungesättigten Carbonsäureester und gegebenenfalls mit ungesättigten Carbonsäureanhydriden modifizierten Ethylenhomo-polymeren oder Ethylen-Vinylester-Copolymeren, insbesondere Ethylen-Vinylacetat, aus Ethylen-Acrylester-Copolymeren, aus Ethylen-Methacrylester-Copolymeren oder aus deren Gemischen.

10. Verbundkörper nach einem oder mehreren der Ansprüche 1 bis 9, **dadurch gekennzeichnet, dass** als Haftvermittler Copolymere eingesetzt werden, die abgeleitet sind von Ethylen und Vinylacetat (E-VA) oder von Ethylen und Acrylestern, insbesondere Methylacrylat, Ethylacrylat, Propylacrylat oder Butylacrylat, und die gegebenenfalls zusätzlich mit Anhydriden ungesättigter Carbonsäuren, insbesondere mit Maleinsäureanhydrid, copolymerisiert bzw. modifiziert sind.

11. Verbundkörper nach einem oder mehreren der Ansprüche 1 bis 10,
**dadurch gekennzeichnet, dass** als Haftvermittler ein Copolymer eingesetzt wird aus der Gruppe bestehend aus Ethylen-Vinylacetat-Maleinsäureanhydrid-Terpolymer, Ethylen-Butylacrylat-Copolymer, Ethylen-Ethylacrylat-Copolymer, Ethylen-Methylacrylat-Copolymer, Ethylen-Glycidylmethacrylat-Copolymer, Ethylen-Methylacrylat-Glycidylmethacrylat-Terpolymer, Ethylen-Ethylacrylat-Glycidylmethacrylat-Terpolymer, Ethylen-Butylacrylat-Glycidylmethacrylat-Terpolymer, Ethylen-Methylacrylat-Maleinsäureanhydrid-Terpolymer, Ethylen-Ethylacrylat-Maleinsäureanhydrid-Terpolymer, Ethylen-Butylacrylat-Maleinsäureanhydrid-Terpolymer und Ethylen-Vinylacetat modifiziert mit Maleinsäureanhydrid.

12. Verbundkörper nach einem oder mehreren der Ansprüche 1 bis 11,
**dadurch gekennzeichnet, dass** haftvermittelnde Copolymere mit einer Schmelztemperatur oder einer Erweichungstemperatur nach Vicat von mehr als 50°C eingesetzt werden.

13. Verbundkörper nach einem oder mehreren der Ansprüche 1 bis 12,
**dadurch gekennzeichnet, dass** dieser mindestens drei Schichten aufweist und mindestens eine Schichtenfolge in der Reihenfolge Polyacetal, haftvermittelnde Schicht und Polyolefin besitzt.

14. Verbundkörper nach einem oder mehreren der Ansprüche 1 bis 13,
**dadurch gekennzeichnet, dass** dieser fünf Schichten aufweist und eine Schichtenfolge in der Reihenfolge Polyacetal, haftvermittelnde Schicht, Polyolefin, haftvermittelnde Schicht und Polyacetal oder in der Reihenfolge Polyolefin, haftvermittelnde Schicht, Polyacetal, haftvermittelnde Schicht und Polyolefin besitzt.

15. Verfahren zur Herstellung des Verbundkörpers nach einem oder mehreren der Ansprüche 1 bis 14 umfassend die Maßnahmen:
a) Herstellung eines Polyacetal-Formteils aus einer Formmasse bestehend aus Polyoxymethylenhomo- oder -copolymeren und gegebenenfalls einem oder mehreren Zusatzstoffen ausgewählt aus der Gruppe bestehend aus Antioxidantien, Säurefängem, Formaldehydfängem, UV-Stabilisatoren, Gleitmitteln, Nukleierungsmitteln, Entformungsmitteln, Füllstoffen, Verstärkungsmaterialien, Farbstoffen, Pigmenten, Schlagzäh-modifiziermitteln und elektrische Leitfähigkeit vermittelnden Zusätzen, in an sich bekannter Weise,
b) Aufbringen einer haftvermittelnden Schicht enthaltend mindestens eines der Polymeren nach Anspruch 1 auf mindestens eine Oberfläche des Polyacetal-Formteils in an sich bekannter Weise, und
c) Aufbringen einer Polyolefin enthaltenden Formmasse auf die nach Schritt b) hergestellte haftvermittelnde Schicht, so dass ein Verbund von Polyacetal-Formteil und Polyolefin-Formteil entsteht.

16. Verfahren zur Herstellung des Verbundkörpers nach einem oder mehreren der Ansprüche 1 bis 14 umfassend die Maßnahmen:
a) Herstellung eines Polyolefin-Formteils aus einer Polyolefin enthaltenden Formmasse in an sich bekannter Weise,
b) Aufbringen einer haftvermittelnden Schicht enthaltend mindestens eines der Polymeren nach Anspruch 1 auf mindestens eine Oberfläche des Polyolefin-Formteils in an sich bekannter Weise, und
c) Aufbringen einer Formmasse bestehend aus Polyoxymethylenhomo- oder -copolymeren und gegebenenfalls einem oder mehreren Zusatzstoffen ausgewählt aus der Gruppe bestehend aus Antioxidantien, Säurefängern, Formaldehydfängern, UV-Stabilisatoren, Gleitmitteln, Nukleierungsmitteln, Entformungsmitteln, Füllstoffen, Verstärkungsmaterialien, Farbstoffen, Pigmenten, Schlagzäh-modifiziermitteln und elektrische Leitfähigkeit vermittelnden Zusätzen auf die nach Schritt b) hergestellte haftvermittelnde Schicht, so dass ein Verbund von Polyacetal-Formteil und Polyolefin-Formteil entsteht.

17. Verfahren nach einem der Ansprüche 15 oder 16, **dadurch gekennzeichnet.**
**dass** die Herstellung des Polyolefin-Formteils und des Polyacetal-Formteils durch Spritzgießverfahren und/oder durch Extrusionsverfahren erfolgt.

18. Verfahren nach einem der Ansprüche 15 oder 16 **dadurch gekennzeichnet,**
**dass** das Aufbringen der haftvermittelnden Schicht durch Spritzgießverfahren und/oder durch Extrusionsverfahren erfolgt.

19. Verwendung von Verbundkörpern nach einem oder mehreren der Ansprüche 1 bis 14 zur Herstellung von Schnappverbindungen, Getriebeteilen, Umlenkrollen, Zahnrädern, Verstellhebeln, Rohren, Verpackungsmaterialien oder Bauteilen die mit Kraftstoffen in Berührung kommen, insbesondere zur Herstellung von Kraftstoff-Fördereinheiten, Ventilen, Tanks oder Einfüllstutzen.

## Claims

1. A composite body comprising at least one polyacetal molded part consisting of polyoxymethylene homo- or copolymers and optionally one or more additives selected from the group consisting of antioxidants, acid scavengers, formaldehyde scavengers, UV stabilizers, lubricants, nucleating agents, mold-release agents, fillers, reinforcing materials, dyes, pigments, impact modifiers and electric conductivity providing additives, and at least one polyolefin molded part, which are bonded together on at least one of their surfaces via an adhesion-mediating layer that essentially consists of a copolymer or a mixture thereof derived from at least one alpha-olefin, at least one ethylenically unsaturated carboxylic acid ester and optionally at least one further ethylenically unsaturated carboxylic acid derivative, wherein the molar ratio of alpha-olefin to ethylenically unsaturated carboxylic acid ester and the optional further ethylenically unsaturated carboxylic acid derivative is selected to form composites having an adhesive strength (measured in a tensile test at 23 °C) of at least 0.2 N/mm².

2. The composite body according to claim 1, **characterized in that** the fillers are glass beads, calcium carbonate, talcum, wollastonite or silicon dioxide, that the reinforcing materials are carbon fibers, aramide fibers or glass fibers, and that the electric conductivity providing additives are carbon black or metal particles.

3. The composite body according to claim 1 or 2, **characterized in that** composite having an adhesive strength (measured in a tensile test at 23 °C) of at least 0.5 N/mm² are formed.

4. The composite body according to one or more of claims 1 to 3, **characterized in that** said polyacetal molded part is a molded part containing a copolymer containing polyoxymethylene and polyoxyethylene and/or polyoxybutylene repeating units.

5. The composite body according to one or more of claims 1 to 4, **characterized in that** said polyolefin molded part is a molded part containing polyethylene.

6. The composite body according to one or more of claims 1 to 5, **characterized in that** said alpha-olefin is ethylene copolymerized with acrylic acid ester, methacrylic acid ester or their combinations.

7. The composite body according to one or more of claims 1 to 6, **characterized in that** ethylene-vinyl ester copolymers, especially ethylene-vinyl acetate copolymers are employed as said adhesion mediator.

8. The composite body according to one or more of claims 1 to 7, **characterized in that** an ethylene-vinyl ester copolymer copolymerized or modified with acrylic acid ester, methacrylic acid ester, itaconic anhydride, maleic anhydride or combinations thereof, especially an ethylene-vinyl acetate copolymer copolymerized or modified with acrylic acid and/or methacrylic acid ester, is employed as said adhesion mediator.

9. The composite body according to one or more of claims 1 to 8, **characterized in that** said composite contains a POM molded part and a polyolefin molded part bonded thereto via a layer of adhesion-mediating polymers, wherein said adhesion-mediating polymer is selected from the group consisting of ethylene homopolymers or ethylene-vinyl ester copolymers, especially ethylene-vinyl acetate, modified with ethylenically unsaturated carboxylic acid esters and optionally with unsaturated carboxylic acid anhydrides, ethylene-acrylic ester copolymers, ethylene-methacrylic ester copolymers or mixtures thereof.

10. The composite body according to one or more of claims 1 to 9, **characterized in that** copolymers derived from ethylene and vinyl acetate (E-VA) or from ethylene and acrylic esters, especially methyl acrylate, ethyl acrylate, propyl acrylate or butyl acrylate, and optionally additionally copolymerized or modified with anhydrides of unsaturated carboxylic acids, especially maleic anhydride, are employed as said adhesion mediator.

11. The composite body according to one or more of claims 1 to 10, **characterized in that** a copolymer selected from the group consisting of ethylene-vinyl acetate-maleic anhydride terpolymer, ethylene-butyl acrylate copolymer, ethylene-ethyl acrylate copolymer, ethylene-methyl acrylate copolymer, ethylene-glycidyl methacrylate copolymer, ethylene-methyl acrylate-glycidyl methacrylate terpolymer, ethylene-ethyl acrylate-glycidyl methacrylate terpolymer, ethylene-butyl acrylate-glycidyl methacrylate terpolymer, ethylene-methyl acrylate-maleic anhydride terpolymer, ethylene-ethyl acrylate-maleic anhydride terpolymer, ethylene-butyl acrylate-maleic anhydride terpolymer and ethylene-vinyl acetate modified with maleic anhydride is employed as said adhesion mediator.

12. The composite body according to one or more of claims 1 to 11, **characterized in that** adhesion-mediating copolymers having a melting temperature or a Vicat softening temperature of more than 50 °C are employed.

13. The composite body according to one or more of claims 1 to 12, **characterized by** having at least three layers and comprising at least one layer sequence in the order of polyacetal, adhesion-mediating layer and polyolefin.

14. The composite body according to one or more of claims 1 to 13, **characterized by** having five layers and comprising a layer sequence in the order of polyacetal, adhesion-mediating layer, polyolefin, adhesion-mediating layer and polyacetal, or in the order of polyolefin, adhesion-mediating layer, polyacetal, adhesion-mediating layer and polyolefin.

15. A process for preparing the composite body according to one or more of claims 1 to 14, comprising the measures:
a) preparing a polyacetal molded part from a molding composition consisting of polyoxymethylene homo- or copolymers and optionally one or more additives selected from the group consisting of antioxidants, acid scavengers, formaldehyde scavengers, UV stabilizers, lubricants, nucleating agents, mold-release agents, fillers, reinforcing materials, dyes, pigments, impact modifiers and electric conductivity providing additives, in a per se known manner;
b) applying an adhesion-mediating layer containing at least one of the polymers according to claim 1 to at least one surface of the polyacetal molded part in a per se known manner, and
c) applying a polyolefin-containing molded part to the adhesion-mediating layer prepared according to step b) to form a composite of polyacetal molded part and polyolefin molded part.

16. A process for preparing the composite body according to one or more of claims 1 to 14, comprising the measures:
a) preparing a polyolefin molded part from a polyolefin-containing molding composition in a per se known manner;
b) applying an adhesion-mediating layer containing at least one of the polymers according to claim 1 to at least one surface of the polyolefin molded part in a per se known manner, and
c) applying a molding composition consisting of polyoxymethylene homo- or copolymers and optionally one or more additives selected from the group consisting of antioxidants, acid scavengers, formaldehyde scavengers, UV stabilizers, lubricants, nucleating agents, mold-release agents, fillers, reinforcing materials, dyes, pigments, impact modifiers and electric conductivity providing additives to the adhesion-mediating layer prepared according to step b) to form a composite of polyacetal molded part and polyolefin molded part.

17. The process according to either of claims 15 or 16, **characterized in that** said preparing of the polyolefin molded part and the polyacetal molded part is effected by injection-molding methods and/or by extrusion methods.

18. The process according to either of claims 15 or 16, **characterized in that** said applying of the adhesion-mediating layer is effected by injection-molding methods and/or by extrusion methods.

19. Use of composite bodies according to one or more of claims 1 to 14 for preparing snap-fit joints, gear parts, deflection pulleys, cogs, adjusting levers, tubes, packaging materials or construction parts contacting fuels, especially for preparing fuel conveying units, valves, fuel tanks or filling pieces.

## Revendications

1. Corps composite comprenant au moins un élément moulé en polyacétal, constitué d'homo- ou de co-polymères de polyoxyméthylène et éventuellement, d'un ou de plusieurs additifs choisis dans le groupe comprenant des anti-oxydants, des piégeurs d'acide, des piégeurs de formaldéhyde, des stabilisants aux UV, des agents lubrifiants, des agents de nucléation, des agents de démoulage, des substances de charge, des matériaux de renforcement, des colorants, des pigments, des agents de modification de la résistance aux chocs et des additifs conférant une conductivité électrique, et au moins un élément moulé en polyoléfine, qui sont liés sur au moins l'une de leurs surfaces avec une couche adhésive qui consiste essentiellement en un copolymère ou un mélange de ceux-ci, qui découle d'au moins une alpha-oléfine, d'au moins un ester d'acide carboxylique éthyléniquement insaturée et éventuellement, d'au moins un autre dérivé d'acide carboxylique éthyléniquement insaturé, le rapport molaire de l'alpha-oléfine à l'acide carboxylique ester éthyléniquement insaturé et éventuellement à un autre dérivé d'acide carboxylique éthyléniquement insaturé étant choisi de telle sorte que des composites se forment, présentant une adhérence (mesurée dans l'essai de traction à 23° C) d'au moins 0,2 N/mm².

2. Corps composite selon la revendication 1, **caractérisé en ce que** les substances de charge sont des billes de verre, du carbonate de calcium, du talc, de la wollastonite ou du dioxyde de silicium, les matériaux de renforcement sont des fibres de carbone, des fibres d'aramide ou des fibres de verre, et les additifs conférant une conductivité électrique sont la suie ou des particules métalliques.

3. Corps composite selon la revendication 1 ou 2, **caractérisé en ce que** des corps composites se forment avec une adhérence (mesurée dans l'essai de traction à 23° C) d'au moins 0,5 N/mm².

4. Corps composite selon une ou plusieurs des revendications 1 à 3, **caractérisé en ce que** l'élément moulé de polyacétal est un élément moulé contenant un copolymérisat contenant des motifs de polyoxyméthylène et de polyoxyéthylène et/ou de polyoxybutylène répétitifs.

5. Corps composite selon une ou plusieurs des revendications 1 à 4, **caractérisé en ce que** l'élément moulé de polyoléfine est un élément moulé contenant du polyéthylène.

6. Corps composite selon une ou plusieurs des revendications 1 à 5, **caractérisé en ce que** l'alpha-oléfine est l'éthylène qui est copolymérisé avec de l'ester d'acide acrylique, de l'ester d'acide méthacrylique ou leurs combinaisons.

7. Corps composite selon une ou plusieurs des revendications 1 à 6, **caractérisé en ce que** l'on utilise comme agent adhésif, des copolymères d'éthylène - ester de vinyle, en particulier, des copolymères d'éthylène - acétate de vinyle.

8. Corps composite selon une ou plusieurs des revendications 1 à 7, **caractérisé en ce que** l'on utilise comme agent adhésif, un copolymère d'éthylène - ester de vinyle qui est copolymérisé ou modifié avec un ester d'acide acrylique, un ester d'acide méthacrylique, un anhydride d'acide itaconique, un anhydride d'acide maléique ou leurs combinaisons, en particulier, un copolymère d'éthylène - acétate de vinyle qui est copolymérisé ou modifié avec un ester d'acide acrylique et/ou acide méthacrylique.

9. Corps composite selon une ou plusieurs des revendications 1 à 8, **caractérisé en ce que** le composite contient un élément moulé de POM et ainsi, un élément moulé de polyoléfine lié par une couche de polymère adhésif, le polymère adhésif étant choisi dans le groupe consistant en des homopolymères d'éthylène ou des copolymères d'éthylène - ester de vinyle, en particulier d'éthylène - acétate de vinyle, modifiés par des esters d'acide carboxylique éthyléniquement insaturés et éventuellement, par des anhydrides d'acide carboxylique insaturés - en des copolymères d'éthylène - acrylate, en des copolymères d'éthylène-méthacrate, ou en leurs mélanges.

10. Corps composite selon une ou plusieurs des revendications 1 à 9, **caractérisé en ce que** l'on utilise comme agents adhésifs, des copolymères qui sont dérivés d'éthylène et d'acétate de vinyle (E-VA) ou d'éthylène et d'acrylates, en particulier, de méthylacrylate, d'éthylacrylate, de propylacrylate ou de butylacrylate et qui sont éventuellement en outre copolymérisés ou modifiés par des anhydrides d'acides carboxyliques insaturés, en particulier par de l'anhydride d'acide maléique.

11. Corps composite selon une ou plusieurs des revendications 1 à 10, **caractérisé en ce que** l'on utilise comme agent adhésif, un copolymère du groupe consistant en terpolymère d'éthylène - acétate de vinyle - anhydride d'acide maléique, un copolymère d'éthylène - butylacrylate, un copolymère d'éthylène - éthylacrylate, un copolymère d'éthylène - méthylacrylate, un copolymère d'éthylène - glycidylméthacrylate, un terpolymère d'éthylène - méthylacrylate - glycidylméthacrylate, un terpolymère d'éthylène - éthylacrylate - glycidylméthacrylate, un terpolymère d'éthylène - butylacrylate - glycidylméthacrylate, un terpolymère d'éthylène - méthylacrylate - anhydride d'acide maléique, un terpolymère d'éthylène - éthylacrylate - anhydride d'acide maléique, un terpolymère d'éthylène - butylacrylate - anhydride d'acide maléique et un éthylène - acétate de vinyle modifié par l'anhydride d'acide maléique.

12. Corps composite selon une ou plusieurs des revendications 1 à 11, **caractérisé en ce que** l'on utilise des copolymères adhésifs avec une température de fusion ou une température de ramollissement Vicat supérieure à 50° C.

13. Corps composite selon une ou plusieurs des revendications 1 à 12, **caractérisé en ce que** celui-ci présente au moins trois couches et possède au moins une série de couches dans l'ordre suivant : polyacétal, couche adhésive et polyoléfine.

14. Corps composite selon une ou plusieurs des revendications 1 à 13, **caractérisé en ce que** celui-ci présente cinq couches et possède une série de couches dans l'ordre suivant : polyacétal, couche adhésive, polyoléfine, couche adhésive et polyacétal ou dans l'ordre suivant : polyoléfine, couche adhésive, polyacétal, couche adhésive et polyoléfine.

15. Procédé de production d'un corps composite selon une ou plusieurs des revendications 1 à 14, comprenant les actions suivantes :
a) production d'un élément moulé de polyacétal à partir d'une masse de moulage constituée d'homo- ou de co-polymères de polyoxyméthylène et éventuellement d'un ou plusieurs additifs choisis dans le groupe comprenant des anti-oxydants, des piégeurs d'acide, des piégeurs de formaldéhyde, des stabilisants aux UV, des agents lubrifiants, des agents de nucléation, des agents de démoulage, des substances de charge, des matériaux de renforcement, des colorants, des pigments, des agents de modification de la résistance aux chocs et des additifs conférant une conductivité électrique, de manière intrinsèquement connue,
b) application d'une couche adhésive contenant au moins l'un des polymères selon la revendication 1 sur au moins une surface de l'élément moulé de polyacétal de manière intrinsèquement connue, et
c) application d'une masse de moulage contenant la polyoléfine sur la couche adhésive produite selon l'étape b) de sorte qu'un composite d'élément moulé de polyacétal et d'élément moulé de polyoléfine soit produit.

16. Procédé de production d'un corps composite selon une ou plusieurs des revendications 1 à 14, comprenant les actions suivantes :
a) production d'un élément moulé de polyoléfine à partir d'une masse de moulage contenant une polyoléfine de manière intrinsèquement connue,
b) application d'une couche adhésive contenant au moins l'un des polymères selon la revendication 1 sur au moins une surface de l'élément moulé de polyoléfine de manière intrinsèquement connue, et
c) application d'une masse de moulage constituée d'homo- ou de co-polymères de polyoxyméthylène et éventuellement, d'un ou plusieurs additifs choisis dans le groupe comprenant des anti-oxydants, des piégeurs d'acide, des piégeurs de formaldéhyde, des stabilisants UV, des agents lubrifiants, des agents de nucléation, des agents de démoulage, des substances de charge, des matériaux de renforcement, des colorants, des pigments, des agents de modification de la résistance aux chocs et des additifs conférant une conductivité électrique, sur la couche adhésive produite selon l'étape b) de sorte qu'un composite d'élément moulé de polyacétal et d'élément moulé de polyoléfine soit produit.

17. Procédé selon l'une des revendications 15 ou 16, **caractérisé en ce que** la production de l'élément moulé de polyoléfine et de l'élément moulé de polyacétal s'effectue par un procédé de coulage par injection et/ou un procédé d'extrusion.

18. Procédé selon l'une des revendications 15 ou 16, **caractérisé en ce que** l'application de la couche adhésive s'effectue par un procédé de coulage par injection et/ou par un procédé d'extrusion.

19. Utilisation de corps composite selon une ou plusieurs des revendications 1 à 14, pour la production de raccords enfichables, de pièces d'engrenage, de poulies de renvoi, de roues dentées, de levier de réglage, de tubes, de matériaux d'emballage ou de pièces qui entrent en contact avec des carburants, en particulier pour la production d'unités de transport de carburant, de soupapes, de cuves ou de tuyaux de remplissage.
